# EUROPEAN PATENT APPLICATION

(11) **EP 4 651 159 A1**
(43) Date of publication of application: **19.11.2025**
(21) Application number: 25177135.8
(22) Date of filing: 16.05.2025
(51) Int. Cl.: H01B 7/42, B60L 53/18, H01B 9/00

(54) **LIQUID COOLING HEAT DISSIPATION CABLE**

(30) Priority: 17.05.2024 CN 202410618015
(71) Applicant: Shenzhen RJC Industrial Co., Ltd, Shenzhen, Guangdong Province 518105 (CN)
(72) Inventor: LUO, Xuguo, Shenzhen, 518105 (CN); JIANG, Hongxing, Shenzhen, 518105 (CN); ZHANG, Guofan, Shenzhen, 518105 (CN)
(74) Representative: JD&P Patent Attorneys Joanna Dargiewicz & Partners

(57) **Abstract**

The present invention discloses a liquid cooling heat dissipation cable which comprises an insulating sheath, a plurality of signal transmission lines, a plurality of power lines, a PE cable, an oil supply pipe and at least two liquid cooling heat dissipation spiral metal transmission copper cable structures. The plurality of signal transmission lines, the plurality of power lines, the PE cable, the oil supply pipe and the at least two liquid cooling heat dissipation spiral metal transmission copper cable structures are all arranged in the insulating sheath, and the at least two liquid cooling heat dissipation spiral metal transmission copper cable structures are arranged in the insulating sheath and used for signal transmission and heat dissipation, and the oil supply pipe is used for supplying liquid cooling oil to the liquid cooling heat dissipation spiral metal transmission copper cable structures. The present invention has the advantages of being good in heat dissipation effect, capable of reducing heating, longer in overall service life, higher in safety and the like.

## Description

### TECHNICAL FIELD

The present invention belongs to the technical field of cables, and particularly relates to a liquid cooling heat dissipation cable.

### BACKGROUND OF THE PRESENT INVENTION

In recent years, with the explosive growth of new energy vehicle sales, a number of charging piles is also increasing. But as far as a quantity of new energy vehicles is concerned, a quantity of charging piles still cannot meet the demand. Although a charging technology is constantly innovating, it takes at least 30 minutes for a new energy passenger car to be charged from power deficit to 80% power. The shortage of charging stations and the long charging time have become shackles for further development of the new energy vehicles. The long charging time process is mainly due to serious heat generation at cable conductor and terminal when the cable is charged with large current for a long time, which forces the charging pile to limit a current when a temperature of the cable temperature rises, thus reducing a charging efficiency. In an existing liquid-cooling high-power cable, a liquid-cooling pipe inside a high-power transmission cable is made of a nylon plastic pipe, covered with copper wires of required square number, and then covered with an insulating sheath, and then combined with required transmission line to form a complete set of charging gun cable. Because the nylon cable is made of plastic, a thermal conductivity thereof is very low. When liquid cooling flows in the pipe, it can only take away a little heat generated by the cable due to poor thermal conductivity, resulting in a high temperature inside and on a surface of the cable, which affects long-term use. Moreover, the cable is seriously heated, which has a safety hazard that is easy to fire.

Therefore, it is necessary to improve the cable. For example, patent application No. 202210301926.9 discloses a liquid cooling charging pile cable with high current charging, which comprises a cable core and a first sheath wrapped outside the cable core, wherein a main power line is arranged in the cable core, and the main power line comprises a conductor line with a semicircular cross section and a liquid cooling channel with a semicircular cross section; the liquid cooling channel is connected with the conductor line to form a main power line with a circular cross section, and the liquid cooling channel is filled with coolant. The cable core is also provided with a coolant output pipeline which is communicated with the liquid cooling channel and can convey the coolant in the liquid cooling channel to an external heat dissipation device through the coolant output pipeline. Along a length direction of the cable, the cable is also provided with a plurality of auxiliary heat dissipation devices. The auxiliary heat dissipation device comprise a buffer cavity and a liquid cooling heat dissipation plate, the buff cavity is arranged on the liquid cooling channel and communicated with the liquid cooling channel, one side wall of the liquid cooling heat dissipation plate is connected with the buffer cavity, the liquid cooling heat dissipation plate is provided with a radiating fin, and the radiating fin is exposed outside the first sheath. The liquid cooling charging pile cable with high current charging adopts the semicircular conductor line and the semicircular liquid cooling channel, which has a certain heat dissipation effect, but cannot fully meet the requirements in specific application.

### SUMMARY OF THE PRESENT INVENTION

In order to solve the shortcomings in the prior art, the present invention provides a liquid cooling heat dissipation cable with good heat dissipation effect and capable of reducing heating.

In order to solve the technical problems, the present invention adopts the following technical solutions.

A liquid cooling heat dissipation cable comprises:
an insulating sheath;
a plurality of signal transmission lines arranged in the insulating sheath;
a plurality of power lines arranged in the insulating sheath;
a PE cable arranged in the insulating sheath;
an oil supply pipe arranged in the insulating sheath; and
at least two liquid cooling heat dissipation spiral metal transmission copper cable structures arranged in the insulating sheath and used for signal transmission and heat dissipation, wherein the oil supply pipe is used for supplying liquid cooling oil to the liquid cooling heat dissipation spiral metal transmission copper cable structures.

Preferably, the liquid cooling heat dissipation spiral metal transmission copper cable structure comprises a spiral metal pipe, a copper cable layer and an insulating layer, the copper cable layer is arranged outside the spiral metal pipe and is attached with an outer wall of the spiral metal pipe, the insulating layer is arranged outside the copper cable layer, an oil supply channel is arranged inside the spiral metal pipe, and the oil supply pipe is used for supplying the liquid cooling oil into the oil supply channel.

Preferably, the oil supply pipe is a polyamide pipe.

Preferably, a filling layer is further arranged in the insulating sheath.

By adopting the technical solutions, the present invention has the following beneficial effects.

The present invention is provided with at least two liquid cooling heat dissipation spiral metal transmission copper cable structures, wherein the liquid cooling heat dissipation spiral metal transmission copper cable structure comprises the spiral metal pipe, the copper cable layer and the insulating layer. During specific use, the heat generated by the copper cable layer is transferred from the spiral metal pipe to the liquid cooling oil, and the heat generated everywhere is quickly taken out of the cable of the present invention due to rapid flow of the liquid cooling oil, so that the purposes of cooling and heat dissipation are achieved. The present invention is good in heat dissipation effect, is capable of reducing heating, has a longer overall service life, is higher in safety, and has high transmission efficiency during specific use. Moreover, because the spiral metal pipe is adopted, an overall flexibility of the present invention is also increased while ensuring a supporting strength.

To sum up, the present invention has the advantages of being good in heat dissipation effect, capable of reducing heating, longer in overall service life, higher in safety and the like.

### DESCRIPTION OF THE DRAWINGS

FIG. 1 is a schematic structural diagram of the present invention;
FIG. 2 is a schematic structural diagram of a liquid cooling heat dissipation spiral metal transmission copper cable structure according to the present invention;
FIG. 3 is a schematic structural diagram of FIG. 2 in another direction; and
FIG. 4 is a sectional view of FIG. 3 in A-A direction.

### DETAILED DESCRIPTION OF PREFERRED EMBODIMENTS

The technical solutions of the present invention will be described clearly and completely with reference to the drawings. Obviously, the described embodiments are a part of the embodiments of the present invention, but not the whole embodiments.

The components of the embodiments of the present invention generally described and shown in the drawings herein may be arranged and designed in various different configurations. Therefore, the following detailed description of the embodiments of the present invention provided in the drawings is not intended to limit the scope of the present invention claimed for protection, but merely represents selected embodiments of the present invention.

Based on the embodiments in the present invention, all other embodiments obtained by those of ordinary skills in the art without the use of innovative faculty shall belong to the protection scope of the present invention.

In the description of the present invention, it should be noted that, the orientation or position relationship related to the orientation description, such as the orientation or position relationship indicated by the terms "center", "upper", "lower", "left", "right", "vertical", "horizontal", "inside", "outside" and the like is based on the orientation or position relationship shown in the drawings, which is only used for convenience of the description of the present invention and simplification of the description instead of indicating or implying that the indicated device or element must have a specific orientation, and be constructed and operated in a specific orientation, and thus should not be understood as a limitation to the present invention. In addition, the terms" first", "second" and "third" are only for the purpose of describing, and should not be understood as indicating or implying relative importance.

In the description of the present invention, it should be noted that, unless otherwise explicitly defined, the terms "mounting", "connected" and "connecting" should be understood a broad sense, for example, it may be fixed connection, detachable connection or integrated connection; may be mechanical connection or electrical connection; and may be direct connection, may also be indirect connection through an intermediate medium, and may be communication inside two elements. For those of ordinary skills in the art, the specific meanings of the above terms in the present invention may be understood in specific situations.

### Embodiment 1

In the embodiment, a liquid cooling heat dissipation resistor is provided, which has good overall heat dissipation effect, longer service life and high transmission efficiency, and also has certain flexibility while having certain supporting strength.

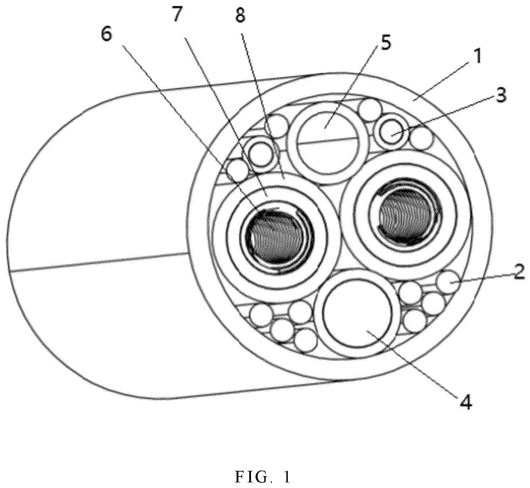

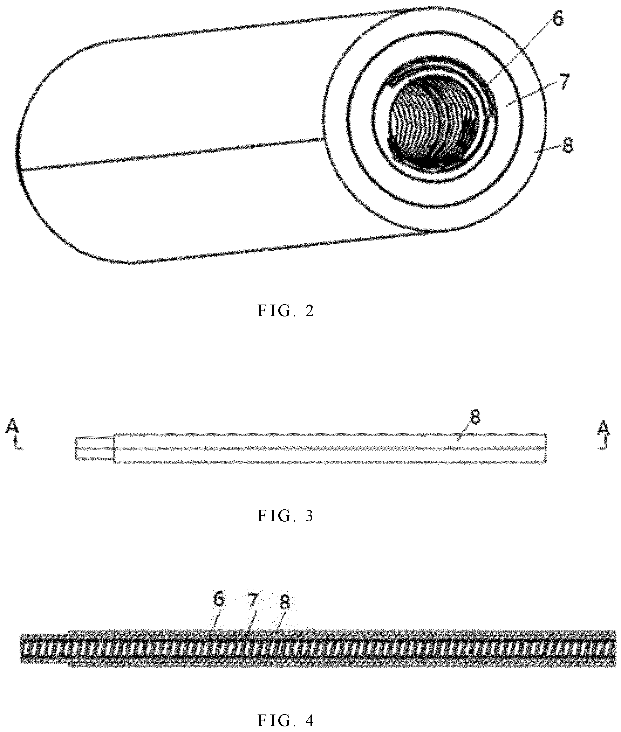

As shown in FIGs. 1 to 4, in one embodiment of the present invention, a liquid cooling heat dissipation cable of the present invention comprises an insulating sheath 1, a plurality of signal transmission lines arranged in the insulating sheath 2, a plurality of power lines 3, a PE cable 4, an oil supply pipe 5 and at least two liquid cooling heat dissipation spiral metal transmission copper cable structures, wherein the plurality of signal transmission lines 2, and a specific position may be selected according to the demands to arrange a filling layer in the insulating sheath 1. To be specific, the filling layer may be arranged between an inner wall of the insulating sheath 1 and outer walls of the parts such as the plurality of power lines 3, the PE cable 4, the oil supply pipe 5 and the at least two liquid cooling heat dissipation spiral metal transmission copper cable structures. The filling layer of the cable belongs to the prior art, and may specifically be a polyethylene filler, a glass fiber filler, an alumina filler, an expanded polypropylene filler, and the like. The at least two liquid cooling heat dissipation spiral metal transmission copper cable structures of the present invention are arranged in the insulating sheath 1 and used for signal transmission and heat dissipation, and the oil supply pipe 5 is used for supplying liquid cooling oil to the liquid cooling heat dissipation spiral metal transmission copper cable structures.

Referring specifically to FIGs. 1 to 4 again, two liquid cooling heat dissipation spiral metal transmission copper cable structures are preferably selected in the present invention, in this case, a "one-inlet and two-outlet" structure is formed, in which one inlet refers to discharging the liquid cooling oil from the oil supply pipe 5, and the two outlets refers to discharging the liquid cooling oil from the two liquid cooling heat dissipation spiral metal transmission copper cable structures, and the oil supply pipe 5 is specifically a polyamide pipe.

Any one liquid cooling heat dissipation spiral metal transmission copper cable structure of the present invention comprises a spiral metal pipe 6, a copper cable layer 7 and an insulating layer 8. The copper cable layer 7 is arranged outside the spiral metal pipe 6 and is attached with an outer wall of the spiral metal pipe 6, the insulating layer 8 is arranged outside the copper cable layer 7, an oil supply channel is arranged inside the spiral metal pipe 6, and the oil supply pipe 6 is used for supplying the liquid cooling oil into the oil supply channel. It can be understood that the spiral metal pipe 6 is a metal pipe an outer wall of which is provided with a spiral chute which is spirally arranged. In the prior art, the polyamide pipe is directly used, and then the copper cable layer 7 and the insulating layer 8 are arranged outside the polyamide pipe, so that the polyamide pipe cannot take away a large amount of heat generated by the copper cable layer 7, which causes the internal temperature of the present invention to be too high. After the temperature of the copper cable layer 7 increases, the internal resistance will further increase, which will affect the transmission efficiency. If the temperature cannot be effectively controlled at a certain temperature, the internal resistance of the cable layer will increase, the heat generation will further increase, and the temperature will accelerate, which will affect the long-term safe use of the present invention. The invention utilizes the support of the spiral metal pipe 6, and meanwhile, the heat generated by the copper cable layer 7 is quickly taken away by the internal oil supply channel, thus effectively ensuring that the internal resistance of the copper cable layer 7 will not increase due to the temperature increase within a certain temperature, thus ensuring the long-term safe use of the present invention. In other words, specifically, the oil supply pipe 5 of the present invention is used for feeding the liquid cooling oil, and then the liquid cooling oil is transported into the oil supply channel to exchange heat with the copper cable layer 7, and then the liquid cooling oil flows out of the present invention and takes away the heat.

The embodiments do not limit the shape, material and structure of the present invention in any form, and any modification, equivalent change and modification of the above embodiments according to the technical essence of the present invention shall belong to the protection scope of the technical solutions of the present invention.

## Claims

1. A liquid cooling heat dissipation cable, **characterized in that**, comprising:
an insulating sheath;
a plurality of signal transmission lines arranged in the insulating sheath;
a plurality of power lines arranged in the insulating sheath;
a PE cable arranged in the insulating sheath;
an oil supply pipe arranged in the insulating sheath; and
at least two liquid cooling heat dissipation spiral metal transmission copper cable structures arranged in the insulating sheath and used for signal transmission and heat dissipation, wherein the oil supply pipe is used for supplying liquid cooling oil to the liquid cooling heat dissipation spiral metal transmission copper cable structures.

2. The liquid cooling heat dissipation cable according to claim 1, **characterized in that**, the liquid cooling heat dissipation spiral metal transmission copper cable structure comprises a spiral metal pipe, a copper cable layer and an insulating layer, the copper cable layer is arranged outside the spiral metal pipe and is attached with an outer wall of the spiral metal pipe, the insulating layer is arranged outside the copper cable layer, an oil supply channel is arranged inside the spiral metal pipe, and the oil supply pipe is used for supplying the liquid cooling oil into the oil supply channel.

3. The liquid cooling heat dissipation cable according to claim 1, **characterized in that**, the oil supply pipe is a polyamide pipe.

4. The liquid cooling heat dissipation cable according to claim 1, **characterized in that**, a filling layer is further arranged in the insulating sheath.
